# EUROPEAN PATENT APPLICATION

(11) **EP 4 407 479 A1**
(43) Date of publication of application: **31.07.2024**
(21) Application number: 22872898.6
(22) Date of filing: 20.09.2022
(51) Int. Cl.: G06F 16/9536

(54) **RECOMMENDATION SYSTEM**

(30) Priority: 21.09.2021 JP 2021153232
(71) Applicant: AISIN CORPORATION, Kariya-shi, Aichi 448-8650 (JP)
(72) Inventor: YOSHIMURA Shiko, Kariya-shi, Aichi 448-8650 (JP); DICARLANTONIO Ron, Toronto, Ontario, M4P 1G8 (CA); FARMANER Gary, Toronto, Ontario, M4P 1G8 (CA)
(74) Representative: Kramer Barske Schmidtchen Patentanwälte PartG mbB
(86) International application number: PCT/JP2022/035019
(87) International publication number: WO 2023/048146

(57) **Abstract**

To provide a technique of recommending a content that is unexpected for a user. A recommendation system includes a content data acquisition unit that acquires content data including an attribute of a content and information indicating popularity, a user data acquisition unit that acquires user data including an interest attribute indicating an attribute of interest to a user and a content of interest to the user, a recommended content acquisition unit that acquires, on the basis of the user data, a content of interest to another user with an interest attribute that is same as or similar to an interest attribute of a target user in an order in which an interest of the target user is estimated to be strong, a rank change unit that changes a rank of a content of interest acquired on the basis of the information indicating popularity, and a content recommendation unit that recommends a content of interest to the target user on the basis of a rank changed.

## Description

### TECHNICAL FIELD

The present disclosure relates to a recommendation system.

### BACKGROUND ART

Conventionally, a technique of, in a WEB site such as a shopping site, recommending a product or the like to an individual user who browses the site is known. Patent Literature 1 describes a method of recommending a product with a product profile having a high matching degree with a user profile to a user. It is described that the product profile is generated on the basis of a keyword included in a comment sent to the product, and the user profile is generated on the basis of a keyword included in a comment for the product purchased by the user in the past.

### CITATIONS LIST

### PATENT LITERATURE

Patent Literature 1: JP 2019-215717 A

### SUMMARY OF DISCLOSURE

### TECHNICAL PROBLEMS

However, in the conventional technique, products matching the tastes and preferences of a user are recommended, and thus there are many products known to the user and similar products, and it is difficult for the user to find an unknown content or a content that has not been tried yet. Therefore, there is a problem that the user tends not to access a recommended content that is not novel for the user.

The present disclosure has been made in view of the above problems, and an aspect of the present disclosure is to provide a technique of recommending a content that is unexpected for a user.

### SOLUTIONS TO PROBLEMS

In order to achieve the above aspects, a recommendation system includes a content data acquisition unit that acquires content data including an attribute of a content and information indicating popularity, a user data acquisition unit that acquires user data including an interest attribute indicating an attribute of interest to a user and a content of interest to the user, a recommended content acquisition unit that acquires, on the basis of the user data, a content of interest to another user with an interest attribute that is same as or similar to an interest attribute of a target user in an order in which an interest of the target user is estimated to be strong, a rank change unit that changes a rank of a content of interest acquired on the basis of the information indicating popularity, and a content recommendation unit that recommends a content of interest to the target user on the basis of a rank changed.

That is, in the recommendation system, the ranking of the contents of interest arranged in the order in which the interest of the target user is estimated to be strong is changed on the basis of the information indicating the popularity of each content, and the contents of interest are recommended to the target user in the changed ranking. Therefore, according to the recommendation system, it is possible to increase the possibility that the content in which the target user is interested and that is novel and unexpected to the target user can be recommended to the target user.

### BRIEF DESCRIPTION OF DRAWINGS

Fig. 1 is a block diagram illustrating a configuration of a recommendation system.
Fig. 2A is a diagram illustrating an example of content data, and Fig. 2B is a diagram illustrating an example of user data.
Fig. 3 is a flowchart of recommendation processing.
Fig. 4 is a diagram illustrating an example of distribution of the total number of reviews.

### DESCRIPTION OF EMBODIMENTS

Here, embodiments of the present disclosure will be described in the following order.
(1) Configuration of Recommendation System:
(2) Recommendation Processing:
(3) Other Embodiments:

### (1) Configuration of Recommendation System:

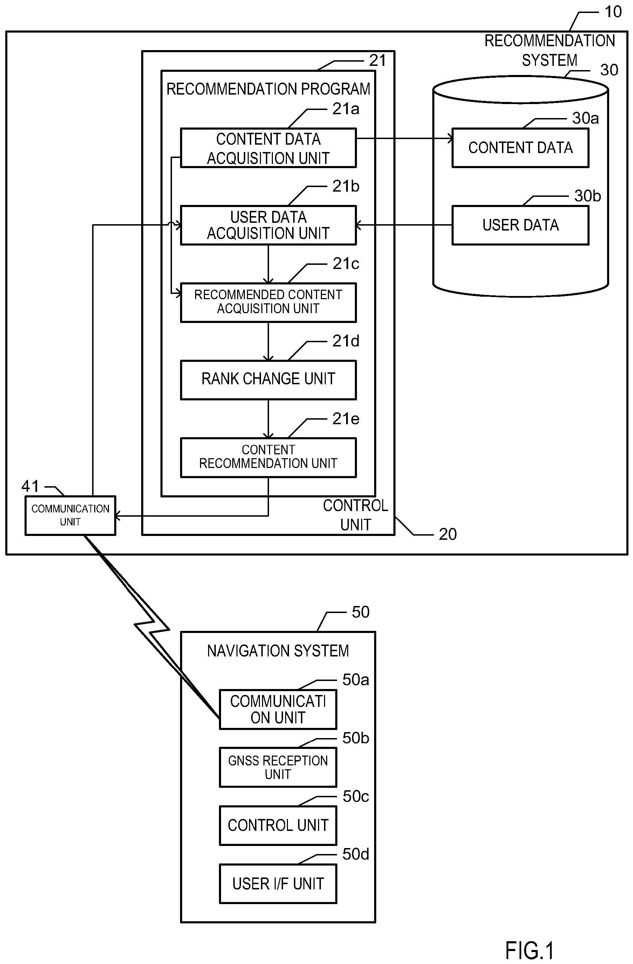

Fig. 1 is a block diagram illustrating a configuration of a recommendation system 10 according to the present disclosure. In the present embodiment, the recommendation system 10 includes a server computer, and recommends a content to a user of a navigation system 50 as a client. There may be a plurality of clients of the recommendation system 10, but one of which is illustrated in Fig. 1. The content recommended in the present embodiment is a facility (point of interest (POI)) that can be set as a destination or the like in a navigation system.

The recommendation system 10 includes a control unit 20 including a CPU, a RAM, a ROM, and the like, a recording medium 30, and a communication unit 41, and can execute a program stored in the recording medium 30 or the ROM in the control unit 20. In the present embodiment, a recommendation program 21 can be executed as this program. The communication unit 41 includes a circuit that communicates with the navigation system 50, and the control unit 20 can communicate with the navigation system 50 by processing of the recommendation program 21.

The navigation system 50 is a device having a navigation function to a destination. The navigation system 50 may be configured as an in-vehicle device, or may be configured as a portable terminal such as a tablet or a smartphone. The navigation system 50 includes a communication unit 50a, a GNSS reception unit 50b, a control unit 50c, and a user I/F unit 50d. The control unit 50c includes a CPU, a ROM, a RAM, and a recording medium, and the CPU can execute various programs including a navigation program recorded in the ROM or the recording medium.

The communication unit 50a includes a communication circuit for wirelessly communicating with other devices. The navigation system 50 can communicate with the recommendation system 10 by the communication unit 50a. The user I/F unit 50d is an interface unit with which the user inputs an instruction and which provides various types of information to the user. The user I/F unit 50d includes a touch panel display, a switch, a speaker, and the like (not illustrated). That is, the user I/F unit 50d includes an output unit of an image and a sound, and an input unit of an instruction from the user.

The GNSS reception unit 50b is a device that receives a global navigation satellite system signal. The GNSS reception unit 50b receives a radio wave from a navigation satellite, and outputs a signal for calculating the position of the navigation system 50 via an interface (not illustrated). By executing the navigation program, the control unit 50c acquires this signal and acquires the position of the navigation system 50. Furthermore, the control unit 50c acquires time from a clocking unit (not illustrated). In a case where the position of the navigation system 50 stays within the predetermined range for a predetermined time or more on the basis of the position and the time, the control unit 50c estimates that the user of the navigation system 50 stays at the position. The control unit 50c specifies a facility present at the position on the basis of map information. Note that the map information may be recorded in a recording medium of the navigation system 50 or may be acquired from a navigation server (not illustrated). In any case, the map information includes at least facility data including a position, a name, a facility ID, a telephone number, a facility genre, and the like of a facility that can be a POI. The control unit 50c transmits the facility ID of the facility where the user is estimated to visit or stay to the recommendation system 10 in association with a user ID.

In addition, when the user operates the user I/F unit 50d to input a review of the facility visited by the user to the navigation system 50, the control unit 50c transmits review data to the recommendation system 10 in association with the user ID. In the present embodiment, the review data includes at least text data. Note that it is needless to mention that image data captured in the time period of stay in the facility may be included in the review data. Furthermore, when the user operates the user I/F unit 50d to input a favorite facility genre, the control unit 50c transmits the favorite facility genre of the user to the recommendation system 10 in association with the user ID.

In the navigation system 50, in a case where predetermined conditions for presenting a recommended facility are satisfied, the control unit 50c transmits a recommendation request to the recommendation system 10 together with the user ID. Note that, in the present embodiment, the recommendation request includes a target area, and the recommendation system 10 acquires a facility in the target area as a recommended facility. The control unit 50c displays the facility returned from the recommendation system 10 in response to the recommendation request on the display unit of the user I/F unit 50d. Note that the predetermined conditions may include that the user performs the specific operation such as the facility search for setting the destination, that a predetermined time elapses, that the user moves by a predetermined distance, and the like. The target area may be an area designated by the user, or may be a predetermined range including the current location.

The recommendation system 10 acquires data transmitted from the navigation system 50 via the communication unit 41. In the recording medium 30 of the recommendation system 10, content data 30a and user data 30b are recorded. The content data 30a is data in which various pieces of information related to the facility are associated with the facility ID of each content, that is, in the case of the present embodiment, each facility. More specifically, the content data includes in advance, a name, location information, an address, a telephone number, and a facility genre of the facility in association with the facility ID. The facility genre indicates a genre to which the facility belongs when the genre is classified. The facility genre may have a hierarchical structure. Note that the keyword of the facility designated on the facility side may be included in the content data in advance. In the operation process of the recommendation system 10, the review data for the facility is transmitted from the user and accumulated in association with the facility. The review data is data indicating an impression or the like that the user has of the facility, and is stored as text data associated with the user ID of the user who has performed the review. The review data is transmitted from the navigation system 50 or other various information terminals to the recommendation system 10 in association with the user ID.

The user data 30b is data in which various types of information related to the user are associated with the user ID. Specifically, the user data includes an interest attribute indicating an attribute of interest to the user and a content of interest to the user. The interest attribute is a (favorite) facility genre in which the user is interested, a keyword in which the user is interested, or the like. In the present embodiment, the interest attribute and the content of interest are recorded on the basis of information transmitted from the navigation system 50. Details will be described later.

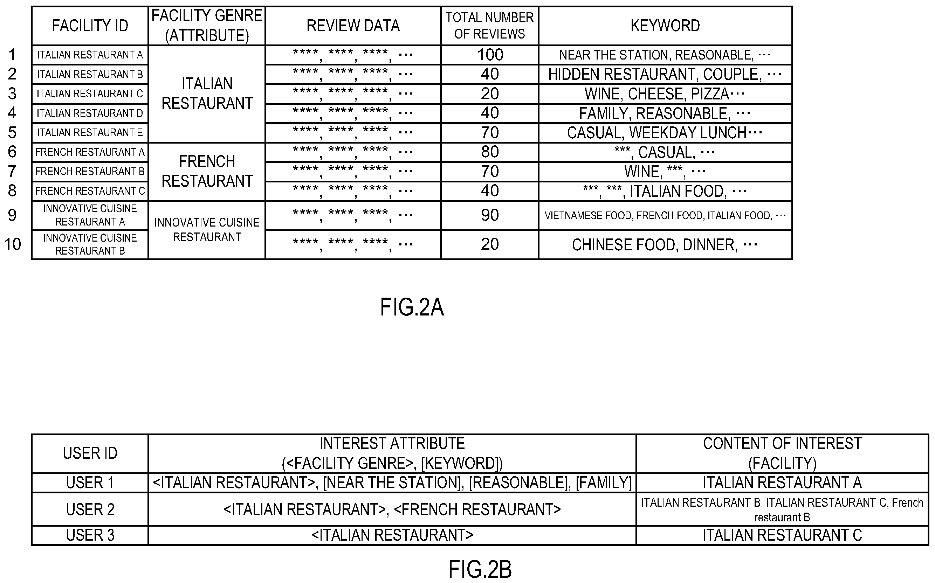

The recommendation program 21 includes a content data acquisition unit 21a, a user data acquisition unit 21b, a recommended content acquisition unit 21c, a rank change unit 21d, and a content recommendation unit 21e in order to implement a function of recommending a facility that is unexpected for the user of the navigation system 50. By the function of the content data acquisition unit 21a, the control unit 20 acquires content data including an attribute of a content and information indicating popularity. In the present embodiment, the control unit 20 acquires a keyword from review data. In a case where the review data includes a word designated by the user as a keyword, the control unit 20 acquires the word as a keyword. In addition, in a case where any of the words determined in advance as the words indicating the features of the facility is included in the sentence of the review, the control unit 20 acquires the word as a keyword. Note that, with regard to the keywords, keywords with similar meanings although the expressions are different are classified in advance (for example, reasonable, low price, inexpensive, and the like), and the keywords are acquired for each classification. The control unit 20 records the keyword acquired in this manner in association with the facility ID (see, for example, Fig. 2A). The facility genre corresponds to the attribute of the content in the present embodiment.

Furthermore, the control unit 20 counts the total number of reviews from the number of users who have transmitted the review data, and records the total number of reviews in association with the facility ID (see, for example, Fig. 2A). Note that the description will be continued assuming that one user can post only one review to one facility. The total number of reviews corresponds to information indicating the popularity of the content in the present embodiment. In the recommendation system 10 of the present embodiment, the facility with a larger total number of reviews is considered to have higher popularity. The control unit 20 acquires the content data 30a recorded in the recording medium 30 through such processing by the function of the content data acquisition unit 21a.

By the function of the user data acquisition unit 21b, the control unit 20 acquires user data including the interest attribute indicating an attribute of interest to the user and a content of interest to the user. In the present embodiment, the interest attribute is a facility genre or a keyword in which the user is interested (see Fig. 2B). The content of interest is an individual facility in which the user is interested. The control unit 20 acquires a facility genre and a keyword of interest, which are input by the user himself or herself and transmitted from the navigation system 50, as the interest attribute. In addition, for example, the control unit 20 may automatically acquire the interest attribute from the history of the behavior of the user transmitted from the navigation system 50. Specifically, for example, in a case where the user has used or visited facilities of the same facility genre a predetermined number of times or more in the past, the facility genre may be acquired as the interest attribute of the user.

In addition, the control unit 20 acquires, as the content of interest to the user, a facility that the user has visited in the past a predetermined number of times or more, a facility registered in the navigation system 50 as a favorite facility of the user, a facility for which the user has created and transmitted the review data, and the like. The control unit 20 stores the interest attribute of the user and the content of interest to the user acquired in this manner in the recording medium 30 as user data in association with the user ID (see, for example, Fig. 2B).

By the function of the recommended content acquisition unit 21c, the control unit 20 acquires a content of interest to another user with an interest attribute that is the same as or similar to the interest attribute of the target user on the basis of the user data in the order in which the interest of the target user is estimated to be strong. That is, when acquiring a recommendation request from the navigation system 50, the control unit 20 refers to the user data 30b and specifies the interest attribute of the user (that is, the target user to be recommended) of the navigation system 50 that is the transmission source of the recommendation request. The control unit 20 then refers to the interest attribute of each user in the user data 30b and extracts another user with the same interest attribute as the specified interest attribute. In the present embodiment, the interest attribute includes a facility genre and a keyword. In the facility genre, the similarity with another facility genre is defined in advance, and the control unit 20 specifies a predetermined type of facility genre in descending order of similarity to the facility genre of interest to the target user. The control unit 20 then refers to the interest attribute of each user in the user data 30b and extracts another user with the facility genre as the facility genre of interest. In addition, the control unit 20 then refers to the interest attribute of each user in the user data 30b and extracts another user with the same keyword as the keyword of interest to the target user as the interest attribute. With regard to the keywords, keywords with similar meanings although the expressions are different are classified in advance, and the control unit 20 also extracts another user with a keyword of another expression belonging to the classification to which the keyword of interest to the target user belongs as the interest attribute. There may be a plurality of such other users.

The control unit 20 further extracts facilities within the target area in the recommendation request from the extracted contents of interest (facilities of interest) to another user, and ranks the extracted facilities in the order in which the interest of the target user is estimated to be strong. For example, the control unit 20 assigns a value R₁ indicating the similarity of the facility genre to each content of interest. R₁ is the maximum in a case where the facility genre is the same, and increases as the similarity increases. In addition, the control unit 20 assigns a value R₂ indicating the matching degree with the keyword of interest to the target user to each content of interest. R₂ increases as the content of interest has more keywords whose classification matches the classification of the keywords of interest to the target user. For example, in a case where there are three keywords of interest to the target user, "near the station", "reasonable", and "family", the value R₂ assigned to the content associated with the classification of all the keywords is the maximum, the value R₂ assigned to the content associated with two of the keywords is the second largest, the value R₂ assigned to the content associated with one of the keywords is the third largest, and the value R₂ assigned to the content associated with none of the three keywords is the minimum.

The control unit 20 calculates an evaluation value V₁ obtained by adding the value R₁ and the value R₂ assigned to each content and sorts the contents in descending order (order in which the interest of the target user is estimated to be strong). That is, the control unit 20 acquires the content of interest in the order in which the interest of the target user is estimated to be strong. Note that, at this stage, there is a possibility that a content known to the target user is included in a high rank.

Subsequently, by the function of the rank change unit 21d, the control unit 20 changes the ranking of the contents of interest acquired as described above on the basis of the information indicating popularity. In the present embodiment, the information indicating popularity is the total number of reviews performed on the content. In the present embodiment, the control unit 20 determines that the higher the total number of reviews (the larger the number of users who have reviewed), the higher the popularity. The control unit 20 changes the ranking by using a weight set in such a manner that the content of interest with a larger total number of reviews is ranked higher. For example, the control unit 20 normalizes the total number of reviews first. Specifically, for example, in a case where the possible range of the value R₁ and the value R₂ is 0 to Rₘₐₓ, the control unit 20 normalizes the total number of reviews of each extracted content of interest in a manner that the maximum value of the total number of reviews of the extracted content of interest is Rₘₐₓ. The control unit 20 then assigns a value R₃ obtained by multiplying the value obtained by normalizing the total number of reviews by a weighting factor of 1 or more to each content, and adds the value R₃ to the evaluation value V₁ of the value R₁ and the value R₂. The control unit 20 sorts evaluation values V₂ after addition in descending order. In this way, it is possible to make it easy to increase the rank of a content that is low in rank before sorting but has high popularity. Therefore, the rank of the content that is novel and unexpected to the target user is likely to increase.

Subsequently, by the function of the rank change unit 21d, the control unit 20 changes the ranking by using a weight set to increase the rank of a content of interest including the contents indicating the interest attribute of the target user in the review data and having an attribute other than the interest attribute of the target user, among the contents of interest whose ranks have been changed on the basis of the information indicating the popularity. That is, in the present embodiment, the weight is set in such a manner that the content with at least a part of the interest attribute of the target user being included in the review data, which does not belong to the facility genre of interest to the target user, is easily ranked higher.

The description will be continued assuming that the user 1 illustrated in Fig. 2B is, for example, the target user. The interest attribute of the user 1 includes Italian restaurant (facility genre), near the station (keyword), reasonable (keyword), and family (keyword). Assuming that the ranking after sorting based on the popularity is, for example, illustrated in Fig. 2A, for French restaurant C in the eighth place, "Italian food" indicating the interest attribute of the target user is included in the keyword (extracted from the review data), but French restaurant C is a facility belonging to a facility genre (French restaurant) other than the interest attribute (facility genre of interest to) of the target user. Similarly, innovative cuisine restaurant A in the ninth place also includes "Italian food" indicating the interest attribute of the target user in the keyword, but is a facility belonging to a facility genre (innovative cuisine restaurant) other than the interest attribute (facility genre of interest to) of the target user. In this manner, the control unit 20 extracts a facility of a facility genre including the contents indicating the interest attribute of the target user in the keyword extracted from the review data but out of the facility genre as the interest attribute of the target user, multiplies the evaluation value V₂ of the facility by, for example, a weighting factor of 1 or more, and sorts the processed evaluation values V₂ in descending order. In this way, it is possible to make it easy to increase the rank of a content that is low in rank before sorting and is difficult to be recommended to the target user.

Subsequently, by the function of the content recommendation unit 21e, the control unit 20 recommends the content of interest to the target user on the basis of the changed ranking. That is, the control unit 20 transmits information of the top X facilities among the ranks sorted by the function of the rank change unit 21d as described above to the navigation system 50. When receiving the information of the top X facilities from the recommendation system 10, the navigation system 50 causes the user I/F unit 50d to display X contents.

As described above, according to the present embodiment, the ranking of contents of interest arranged in the order in which the interest of the target user is estimated to be strong is changed on the basis of information indicating the popularity of each content, and furthermore, the ranking is changed using the weight set in a manner that the content including the contents indicating the interest attribute of the target user but belonging to the interest attribute other than the interest attribute of the target user is easily ranked higher. Then, the contents of interest are recommended to the target user in the changed ranking. Therefore, according to the present embodiment, it is possible to increase the possibility that the content in which the target user is interested and that is novel and unexpected to the target user can be recommended to the target user.

### (2) Recommendation Processing:

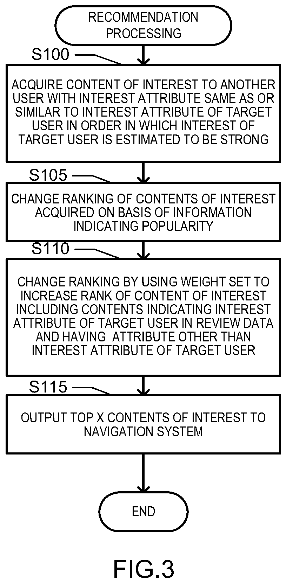

Next, the recommendation processing performed by the control unit 20 will be described with reference to Fig. 3. The recommendation processing is performed in a case where the control unit 20 receives a recommendation request for the target user from the navigation system 50 via the communication unit 41. When the recommendation processing is started, by the function of the recommended content acquisition unit 21c, the control unit 20 acquires a content of interest to another user with an interest attribute that is the same as or similar to the interest attribute of the target user in the order in which the interest of the target user is estimated to be strong (step S100). That is, the control unit 20 specifies the interest attribute of the target user on the basis of the user ID of the target user and the user data 30b acquired from the navigation system 50. The control unit 20 specifies another user with an interest attribute that is the same as or similar to the interest attribute of the target user. Then, the control unit 20 specifies a content of interest to the specified another user, and sorts the contents in the order in which the interest of the target user is estimated to be strong. More specifically, the contents are sorted in descending order based on the evaluation value V₁ described above.

Subsequently, by the function of the rank change unit 21d, the control unit 20 changes the ranking of the contents of interest acquired on the basis of information indicating popularity (step S105). In the present embodiment, the control unit 20 changes the ranking by using a weight set in such a manner that the content of interest with a larger total number of reviews is ranked higher. Specifically, the ranking is sorted in descending order based on the evaluation value V₂ described above.

Subsequently, by the function of the rank change unit 21d, the control unit 20 changes the ranking by using a weight set to increase the rank of a content of interest including the contents indicating the interest attribute of the target user in the review data and having an attribute other than the interest attribute of the target user (step S110). Specifically, the control unit 20 multiplies the evaluation value V₂ of a facility including the contents indicating the interest attribute (facility genre) of the target user in the keyword but belonging to a facility genre different from the facility genre of interest to the target user by, for example, a weighting factor of 1 or more, and sorts the processed evaluation values V₂ in descending order.

Subsequently, the control unit 20 outputs the top X contents of interest to the navigation system 50 by the function of the content recommendation unit 21e (step S115). Specifically, the control unit 20 transmits information of the top X facilities in the ranking after the processing in step S110 to the navigation system 50 that is the transmission source of the recommendation request. When receiving the information of the top X facilities from the recommendation system 10, the navigation system 50 causes the user I/F unit 50d to display X contents.

### (3) Other Embodiments:

The above embodiment is an example for carrying out various aspects of the present disclosure, and various other embodiments can be adopted. For example, the recommendation system 10 may include a plurality of devices (a server, a client, and the like) For example, the recommended content acquisition unit 21c, the rank change unit 21d, and the content recommendation unit 21e constituting the recommendation system may be present in a client device. Some configurations of the above embodiment may be omitted, or the order of processing may be changed or omitted.

The content to be recommended by the recommendation system is not limited to a facility that can be a destination in the navigation function. The content may be event information. Moreover, the present disclosure can also be applied to a case where recommendations of products, services, or functions are presented in a shopping site, another site, a smartphone application, or the like other than the navigation system, for example.

The attribute is an index indicating a feature of a content belonging to a group when the contents are classified into the same type of group. For example, in a case where the user is interested in a particular type of content, the particular type is the interest attribute. In addition, the individual content in which the user is interested is the content of interest. The recommended content acquisition unit is only required to acquire a content of interest to another user with an interest attribute that is the same as or similar to the interest attribute of the target user on the basis of the user data in the order in which the interest of the target user is estimated to be strong, and the method thereof is not limited to the example of the above embodiment. For example, another user with user profiles such as a residential area, an age group, a gender, and a family structure similar to those of the target user may be estimated to have a similar interest attribute to the target user, and another user may be extracted. Then, the extracted contents of interest to a plurality of other users may be sorted in descending order of the number of overlapped contents (the number of users having an interest in the content).

Information indicating the intensity of interest (for example, the frequency of designation by the operation of the user, or the like) may be predefined and the intensity of interest may be quantified on the basis of the information. Then, the descending order of interest to another user with an interest attribute that is the same as similar to that of the target user may be regarded as the order of interest to the target user.

The popularity is an index indicating whether or not it is known to a large number of users (the target user may or may not be included), and the information indicating the popularity of a content may be the number of media postings, display ranking in a search engine, or the like. The information indicating the popularity of a content may be defined by the number of users who have taken some action on the content. The action of the user may be a review of the content, or may be, for example, browsing of the information of the content, marking the content as a favorite, or the like.

In the above embodiment, the ranking is changed using the weight set in such a manner that the content of interest with a larger total number of reviews is ranked higher, but the ranking may be changed using the weight set in such a manner that the content of interest with a larger total number of reviews is ranked lower. In this case, the rank of the content with high popularity is likely to decrease, and as a result, the rank of the content with low popularity is likely to increase. Therefore, in a case where the content is recommended in order from the top, there is a high possibility that the content with low popularity, that is, unknown and unexpected to the target user can be recommended. For example, by replacing the value R₃ in the above embodiment with a value obtained by multiplying a value calculated by normalizing the total number of reviews by a negative weighting factor, it is possible to easily lower the rank of the content with a large total number of reviews.

The rank change unit may be configured to switch the mode of a rank change based on information indicating popularity depending on whether or not the total number of reviews for the content meets the criterion indicating the credibility. Specifically, the rank change unit may be configured to change the ranking by using a weight set in such a manner that the content of interest with a larger total number is ranked higher in a case where the total number does not meet the criterion, and change the ranking by using a weight set in such a manner that the content of interest with a larger total number is ranked lower in a case where the total number of reviews meets the criterion.

The criterion indicating the credibility is an index indicating that the total number of reviews of each content of interest acquired by the recommended content acquisition unit is sufficient to be determined to be correlated with the popularity of each content of interest (that is, a content with a relatively large total number has relatively high popularity, and a content with a relatively small total number has relatively low popularity). In a case where the criterion is met, the rank change unit determines that the number of reviews of each content has credibility as information indicating the popularity of the content, and in a case where the criterion is not met, the rank change unit determines that the number of reviews of each content does not have credibility as information indicating the popularity of the content.

In a case where the total number of reviews of the content meets the criterion, the rank change unit determines the content with a relatively small total number of reviews as the content with relatively low popularity, and changes the ranking by using the weight set in such a manner that the content of interest with a larger total number (higher popularity) is ranked lower. As a result, the rank of the content of interest with a small total number (low popularity) is likely to increase. As a result, the possibility of being capable of recommending a content that is unknown and unexpected to the target user is increased.

On the other hand, in a case where the total number of reviews of the content does not meet the criterion, the rank change unit determines that it is difficult to determine whether the content has a relatively small total number of reviews because the popularity is low or the number of reviews is accidentally small although the popularity is not low. Furthermore, in a case where the total number of reviews of the content does not meet the criterion, the rank change unit determines that the content with a relatively large total number of reviews is possibly not low in popularity. In a case where the total number of content reviews does not meet the criterion, the rank change unit changes the ranking by using a weight set in such a manner that the content of interest with a larger total number of reviews is ranked higher. As a result, it is possible to make it easy to increase the rank of a content that is low in rank before sorting but possibly has high popularity. Therefore, the rank of the content that is novel and unexpected to the target user is likely to increase.

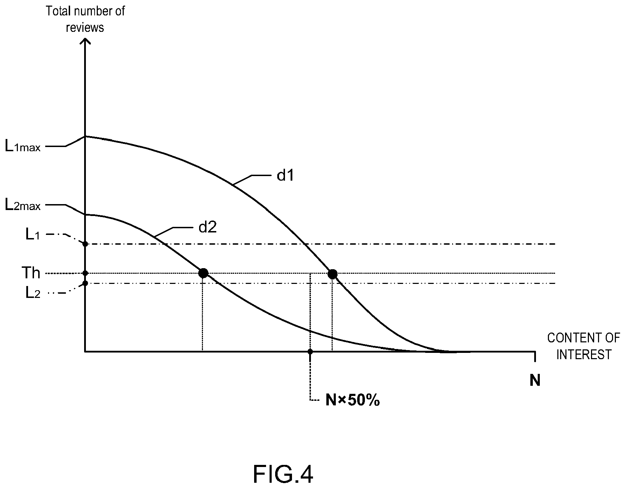

Various modes can be assumed as the criterion indicating the credibility. As an example of the criterion indicating the credibility, the following criterion may be adopted. Fig. 4 is a graph illustrating the total number of reviews of N contents of interest, and is an example of a graph in which the contents are sorted in the order of total number of reviews for convenience of description (it does not show the ranking of contents before a rank change by the rank change unit or the ranking of contents after the rank change.). The vertical axis represents the total number of reviews, and the horizontal axis represents each content. In a case where the proportion of contents whose number of reviews is equal to or larger than a threshold Th to N contents is, for example, equal to or more than 50%, the rank change unit determines that the total number of reviews of each content meets the criterion indicating the credibility, and in a case where the proportion is less than 50%, the rank change unit determines that the criterion is not met. For example, a distribution d1 shows an example in which the number of contents whose number of reviews is equal to or larger than the threshold Th is equal to or more than 50%, and a distribution d2 shows an example in which the number of contents whose number of reviews is equal to or larger than the threshold Th is less than 50%. In a case where the criterion indicating the credibility is met as in the distribution d1, the rank change unit enables the rank of the content of interest with a relatively small total number (low popularity) to easily increase as described above, and in a case where the criterion indicating the credibility is not met as in the distribution d2, the rank change unit enables the rank of the content of interest with a relatively large total number (possibly not low popularity) to easily increase as described above.

Note that as an example of the criterion indicating the credibility, the following criterion may be adopted. The rank change unit compares a value corresponding to, for example, 50% of the total number of reviews of the content with the largest total number of reviews among the contents of interest with the threshold Th. In a case where the value is equal to or larger than the threshold Th, the rank change unit determines that the total number of reviews of each content meets the criterion indicating the credibility, and in a case where the value is less than the threshold Th, the rank change unit determines that the total number of reviews of each content does not meet the criterion indicating the credibility. For example, the distribution d1 shows an example in which a value L₁ of 50% of the maximum number of reviews (L₁ₘₐₓ) is equal to or more than the threshold Th, and the distribution d2 shows an example in which a value L₂ of 50% of the maximum number of reviews (L₂ₘₐₓ) is less than the threshold Th. In a case where the criterion indicating the credibility is met as in the distribution d1, the rank change unit enables the rank of the content of interest with a relatively small total number (low popularity) to easily increase as described above, and in a case where the criterion indicating the credibility is not met as in the distribution d2, the rank change unit enables the rank of the content of interest with a relatively large total number (possibly not low popularity) to easily increase as described above.

The rank change unit may be configured to change the ranking by using the weight set to lower the rank of a content of interest including the contents indicating the interest attribute of the target user in the review data and having an attribute other than the interest attribute of the target user, among the contents of interest whose ranks have been changed on the basis of the information indicating the popularity. For example, the evaluation value V₂ of the content of interest that is the content of interest including the contents indicating the interest attribute of the target user in the review data and having an attribute other than the interest attribute of the target user may be multiplied by a weighting factor of less than 1. By performing such an operation, for example, in the example of Fig. 2A, the rank of the facility including the keyword "Italian food" can be easily lowered for the user who likes Italian food. As a result, it is possible to relatively increase the rank of a content that is unexpected for the target user.

Note that, in the above embodiment, after the ranking is changed on the basis of the information indicating the popularity, the rank of the content of interest with an attribute other than the interest attribute of the target user is changed, however, the content of interest may be recommended in the ranking changed on the basis of the information indicating the popularity.

Furthermore, the present disclosure is applicable not only to keywords but also to key phrases. For example, the present disclosure can be similarly applied to sentences with modifiers such as "Japanese style Italian food" and "restaurant with good ambience".

Furthermore, the method of the present disclosure can also be applied as a program or a method. In addition, the system, the program, and the method described above may be implemented as a single device or may be implemented by using a component shared with each unit included in a vehicle, and include various modes. Moreover, it can be changed as appropriate in a manner that a part is software and a part is hardware. Further, the disclosure is also established as a recording medium of a program for controlling a system. It is needless to mention that, the recording medium of the program may be a magnetic recording medium or a semiconductor memory, and can be considered in exactly the same manner in any recording medium to be developed in the future.

### REFERENCE SIGNS LIST

- 10: recommendation system
- 20: control unit
- 21: recommendation program
- 21a: content data acquisition unit
- 21b: user data acquisition unit
- 21c: recommended content acquisition unit
- 21d: rank change unit
- 21e: content recommendation unit
- 30: recording medium
- 30a: content data
- 30b: user data
- 41: communication unit
- 50: navigation system
- 50a: communication unit
- 50b: GNSS reception unit
- 50c: control unit
- 50d: user I/F unit

## Claims

1. A recommendation system comprising:
a content data acquisition unit that acquires content data including an attribute of a content and information indicating popularity;
a user data acquisition unit that acquires user data including an interest attribute indicating an attribute of interest to a user and a content of interest to the user;
a recommended content acquisition unit that acquires, on a basis of the user data, a content of interest to another user with an interest attribute that is same as or similar to an interest attribute of a target user in an order in which an interest of the target user is estimated to be strong;
a rank change unit that changes a rank of a content of interest acquired on a basis of the information indicating popularity; and
a content recommendation unit that recommends a content of interest to the target user on a basis of a rank changed.

2. The recommendation system according to claim 1, wherein
the information indicating popularity includes a total number of reviews performed on the content,
the rank change unit changes a ranking by using a weight set so as to increase a rank of a content of interest with the total number being large, and
the content recommendation unit recommends a content of interest in order from a top.

3. The recommendation system according to claim 1, wherein
the information indicating popularity includes a total number of reviews performed on the content,
the rank change unit changes a ranking by using a weight set so as to lower a rank of a content of interest with the total number being large, and
the content recommendation unit recommends a content of interest in order from a top.

4. The recommendation system according to claim 1, wherein
the information indicating popularity includes a total number of reviews performed on the content,
the rank change unit changes a ranking by using a weight set so as to increase a rank of a content of interest with the total number being large in a case where the total number does not meet a criterion indicating credibility, and
changes a ranking by using a weight set so as to lower a rank of a content of interest with the total number being large in a case where the total number meets the criterion, and
the content recommendation unit recommends a content of interest in order from a top.

5. The recommendation system according to any one of claims 1 to 4, wherein
the content data includes review data for the content, and
the rank change unit changes a ranking by using a weight set so as to increase a rank of a content of interest including contents indicating an interest attribute of the target user in the review data and having an attribute other than an interest attribute of the target user, among contents of interest whose ranks have been changed on a basis of the information indicating popularity.

6. The recommendation system according to any one of claims 1 to 4, wherein
the content data includes review data for the content, and
the rank change unit changes a ranking by using a weight set so as to lower a rank of a content of interest including contents indicating an interest attribute of the target user in the review data and having an attribute other than an interest attribute of the target user, among contents of interest whose ranks have been changed on a basis of the information indicating popularity.
